# EUROPEAN PATENT SPECIFICATION

(11) **EP 2 253 216 B1**
(45) Date of publication and mention of the grant of the patent: **08.08.2018**
(21) Application number: 10163345.1
(22) Date of filing: 19.05.2010
(51) Int. Cl.: A23P 20/25, A23L 29/262, A21D 13/31, A21D 13/38, A21D 13/60, A21D 2/18

(54) **Method of producing filling comprising water-soluble cellulose ether**
Verfahren zur Herstellung einer Füllung enthaltende wasserlösliche Celluloseether
Procédé de production de fourrage comprenant de l'éther de cellulose soluble dans l'eau

(30) Priority: 19.05.2009 JP 2009120941
(43) Date of publication of application: 24.11.2010
(73) Proprietor: Shin-Etsu Chemical Co., Ltd., Chiyoda-ku, Tokyo (JP)
(72) Inventor: Fukasawa, Miyuki, Chiyoda-ku Tokyo (JP); Hayakawa, Kazuhisa, Joestsu-shi Niigata (JP); Kuribayashi, Daisuke, Sakai-shi Osaka (JP)
(74) Representative: Gill Jennings & Every LLP

(56) References cited:
- EP-A1- 1 595 460
- WO-A1-94/23588
- GB-A- 1 275 049
- GB-A- 1 423 608
- US-A- 3 891 776
- US-A1- 2009 047 390

## Description

### Background of the Invention

### 1. Field of the Invention

The present invention relates to a method of producing filled processed food products such as steamed buns, breads, pies, filling-containing doughnuts, the filling being gelled upon heating and thereby exhibiting a water retention effect and a water-vaporization prevention effect during heating, and also relates to a filled food product.

### 2. Description of the Related Art

Conventionally, steamed buns filled with filling ingredients, such as meat buns and sweet-bean-paste buns; curry breads; meat pies; curry doughnuts; and the like have been known as filled food products.

However, conventional filled food products have the following drawbacks. Specifically, in the production of a steamed bun, bread, pie, doughnut, or the like by using the filling ingredient as described above, water vaporizes from the filling ingredients during heating, when the food product is subjected to a final step of steaming, baking, or frying. Such vaporized water causes a problem of weakening the dough portion or deteriorating the texture thereof. Moreover, the vaporization of water in the filling ingredients during heating causes problems that the dough is broken (punctured), and that the filling ingredients lose their juicy texture.

As means for preventing such problems, for example, Japanese Patent No. 3952342 discloses a method in which a protein and curdlan having a thermal coagulation effect are added to filling ingredients to be filled into a processed food product, and thereby the water retention capability of the filling ingredients is improved. Since the protein and curdlan have an irreversible thermal coagulation property, there is a problem that the processed food product gives a hard texture when being eaten.

Japanese Patent Application Publication No. 2006-271289 proposes a method in which bumping of filling ingredients is prevented by adding an emulsifier in a liquid crystal state to a filling for baking. However, since a sucrose fatty acid ester having a strong bitterness is used, an addition amount thereof is limited, resulting in a problem that if the filling has a high water content, water separation cannot be prevented sufficiently.

Meanwhile, regarding a processed food product containing methyl cellulose or hydroxypropyl methyl cellulose, Japanese Patent Application Publication No. 2002-51758 discloses a stabilizer for a frozen food, the stabilizer containing methyl cellulose or hydroxypropyl methyl cellulose. However, the target of this stabilizer is only frozen foods, and food products shown as examples in this publication are croquette and tempura (Japanese battered and deep-fried foods). Accordingly, no filled food products have been proposed.

Moreover, Japanese Patent Application Publication No. 2006-320219 discloses a method of producing a filling-containing food product such as a steamed bun, the method comprising a step of wrapping a heated filling. However, no method of improving water retention capability of a heat-cooked filling has been disclosed. GB 1 275 049 A discloses a method of manufacturing a baked pastry product containing a filling which comprises mixing raw or partially cooked meat or fruit particles with a suspension of agar in an aqueous solution or partial solution of a water-soluble cellulose ether to form a pie filling, covering the filling with pastry dough and thereafter effecting heating to bake the pastry and cook the filling.

EP 1 595 460 A1 discloses a method of producing a food product. A food material like vegetable, animal meat or fish meat is heat treated if necessary, and ground using a cooking utensil such as a food processor or potato masher, to which a water-soluble cellulose ether in powder form or in aqueous solution form and agar in solution form are added.

US 2009/047390 A1 discloses a microwaveable foodstuff comprising a pasta shell and a filling made of a mixture of a high protein foodstuff (e.g. thawed chicken) and vegetable foodstuff (e.g. cleaned fresh vegetables) and a broth foodstuff (e.g. broth, soup, potage, gumbo, consommé, bouillabaisse, bisque, chowder) disposed substantially enveloped by the mixture of the high protein foodstuff and vegetable foodstuff. After extrusion the filled product is conveyed to a rotary blancher (e.g. for boiling).

### Summary of the Invention

An object of the present invention is to overcome the above-described problems involved in producing a heat-cooked filling, and to provide: a method of producing a filling which improves water retention capability during heating after the filling is wrapped, and which has an excellent texture; and a filled food product produced by using the filling.

The inventors have made earnest study in order to solve the above problems, and have found the following fact. Specifically, water-soluble cellulose ether which is gelable during heating is added to one or more heat-cooked filling ingredients during the production thereof, and then thus obtained filling ingredients are wrapped. Thereby, water retention capability of the filling ingredients during second heating is significantly improved, and a filled food product having an excellent texture can be produced. This finding leads to the completion of the present invention.

The present invention provides a method of producing a food product according to claim 1. The present invention provides also a food product comprising a filling according to claim 10. The filling for a filled food product a filled food product comprising the filling are capable of preventing quality deterioration of a dough portion and capable of giving a juicy texture, because the water retention percentage of the filling during second heating is improved.

### Detailed Description of the Preferred Embodiment

Water-soluble cellulose ether which is gelable during heating (hereinafter, referred to as heat-gelable and water-soluble cellulose ether) used in the present invention can be obtained by etherifying cellulose. An aqueous solution of the water-soluble cellulose ether shows a property of reversible thermal gelation in which the solution becomes white turbid and gelled upon heating, but returns to the original transparent aqueous solution state upon cooling. For utilizing such a property, the water-soluble cellulose ether is added to many food products for the purpose of improving thermal resistance of fillings or preventing puncture of croquettes. During heating, the water-soluble cellulose ether causes the food products to be gelled, thereby preventing water vaporization and improving shape retention properties. Meanwhile, in a temperature range where the food products are eaten, the gel structure disappears. Accordingly, the water-soluble cellulose ether has a characteristic of providing a softer and creamier texture than that provided by irreversible gelatinizing agents.

When powdery heat-gelable and water-soluble cellulose ether is added to one or more heat-cooked filling ingredients, the following is conceivable. Specifically, the powdery water-soluble cellulose ether dissolves in water separated from the filling ingredients during the heat-cooking, and causes a filling to be gelled during second heating conducted after the filling is wrapped, thereby improving water retention capability. Thus, second water separation can be prevented during the second heating.

Moreover, when an aqueous solution of the heat-gelable and water-soluble cellulose ether is added to one or more heat-cooked filling ingredients, the following is conceivable. Specifically, when second heating is conducted after the filling ingredients are wrapped, a thermally formed gel structure of the water-soluble cellulose ether prevents water from vaporizing, thereby providing an effect of preventing water separation.

When powdery heat-gelable and water-soluble cellulose ether is added to a filling of one or more non-heat-processed filling ingredients, the following is conceivable. Specifically, heated water vaporizes or separates especially from meats, sea foods and vegetables during heating. However, the powdery heat-gelable and water-soluble cellulose ether has such a property that the powdery water-soluble cellulose ether does not dissolve in heated water, making it impossible to cause the gelation of the filling. As a result, the water retention capability can not be improved.

When an aqueous solution of powdery heat-gelable and water-soluble cellulose ether is added to a filling of one or more non-heat-processed filling ingredients, the following is conceivable. Specifically, no effect of preventing water from separating especially from meats, sea foods and vegetables is obtained during heating. As a result, an effect of improving water retention capability is weak.

Hereinafter, the present invention will be described in further details.

The filling for a filled food product is wrapped with a dough of a bread or the like serving as a dough skin, and be then heated, fried or baked together with the dough of the bread or the like.

The filling for a filled food product comprises the heat-gelable and water-soluble cellulose ether. As the water-soluble cellulose ether used in the present invention, water-soluble cellulose ether which becomes water-soluble as a result of etherification of cellulose can be used. Although any type of such water-soluble cellulose ether can be used, preferably used is methyl cellulose having methyl groups, or hydroxyalkyl alkyl cellulose in which a small amount of hydroxyalkyl groups such as hydroxypropyl groups or hydroxyethyl groups is introduced by substitution, in addition to methyl groups or ethyl groups.

As the methyl cellulose, preferably used is water-soluble methyl cellulose (gelation temperature: 50°C, dissolution temperature: 20°C) having a degree of methoxyl substitution of approximately 19 to 32% by weight. As the hydroxyalkyl alkyl cellulose, preferably used is hydroxypropyl methyl cellulose (gelation temperature: 70 to 80°C, dissolution temperature: 30 to 40°C) having a degree of methoxyl substitution of 19 to 32% by weight and a degree of hydroxypropoxyl substitution of 4 to 12% by weight, hydroxyethyl methyl cellulose (gelation temperature: 70 to 80°C, dissolution temperature: 35 to 55°C) having a degree of methoxyl substitution of 19 to 32% by weight and a degree of hydroxyethyoxyl substitution of 4 to 12% by weight, or hydroxyethyl ethyl cellulose (gelation temperature: 63°C, dissolution temperature: 60°C) having a degree of ethyoxyl substitution of 5 to 20% by weight and a degree of hydroxyethyoxyl substitution of 4 to 60% by weight. These can be used alone or as a mixture of two or more.

Note that these degrees of substitution can be determined in accordance with the Zeisel-GC method described in J.G. Gobler, E.P. Samsel, and G.H. Beaber, Talanta, 9, 474 (1962). Moreover, these degrees can also be determined by a measurement method using gas chromatography and described in "methyl cellulose" of Japanese Standards of Food Additives, or a method in accordance with the measurement method of a degree of substitution of methyl cellulose and hydroxypropyl methyl cellulose specified in the Japanese Pharmacopoeia.

The molecular weight of the water-soluble cellulose ether of the present invention may be any value as long as the molecular weight is large enough to allow an aqueous solution of the water-soluble cellulose ether to be thermally gelled upon heating, and to allow the gel to return to the aqueous solution upon cooling as described above. The measurement of such a molecular weight can be performed, as described in J. Polym. Sci., 39, 293-298, 1982, by employing a viscosity in a 2% by weight aqueous solution at 20°C which correlates with the molecular weight. As this viscosity, a viscosity value of a 2% by weight aqueous solution at 20°C measured with an Ubbelohde viscosimeter specified in JIS K2283-1993 can be used. For the purpose of improving water retention capability and exhibiting a function expected by the present invention in a smaller added amount, the viscosity of the water-soluble cellulose ether of the present invention may be preferably 15 mPa·s or more, further preferably approximately 100 to 100,000 mPa·s.

The total or individual content of the water-soluble cellulose ether which is gelable during heating and which is comprised in the filling may be preferably 0.1 to 5% by weight, particularly preferably 0.1 to 2% by weight. When the added amount is less than 0.1% by weight, a sufficient improvement effect on the water retention capability may not be obtained during the second heating. When the added amount is more than 5% by weight, too high viscosity of the water-soluble cellulose ether may be given to one or more food ingredients so that change from original texture may be caused.

The filling for a filled food product can be obtained by a method comprising at least the steps of: heat-processing one or more filling ingredients; and mixing the heat-processed filling ingredients with the heat-gelable and water-soluble cellulose ether, to thereby obtain a filling.

One or more filling ingredients of the filling for a filled food product may be made up of heat-processed meat, sea food, vegetables, and/or seasonings. However, such a main ingredient and/or a sub-ingredient may not be particularly limited, as long as the object of the present invention is not impaired. A method of heating the filling ingredients can be selected depending on the type of the filling ingredients used, and any of publicly known methods can be used. Note that no water retention effect is obtained when the water-soluble cellulose ether is added to one or more non-heat-processed filling ingredients and then is heated. However, water retention effect can be obtained when the water-soluble cellulose ether is added to one or more heat-processed filling ingredients and then is heated. This is because, when the water-soluble cellulose ether is added to the non-heat-processed filling ingredients, protein structures change during heating so significantly that the amount of water separated is too much to be controlled. However, once the protein denatures upon heating, not so much water separates therefrom. Accordingly, when the water-soluble cellulose ether is added to the heat-processed filling ingredients, water separated from the filling ingredient in a subsequent step of any one of heating, baking and frying can be controlled. Thus, a water retention effect can be obtained.

Next, the heat-processed filling ingredients are mixed with the heat-gelable and water-soluble cellulose ether. The mixing may be performed in the following manner, for example. The powdery heat-gelable and water-soluble cellulose ether or an aqueous solution of the heat-gelable and water-soluble cellulose ether may be added to heat-processed filling ingredients at a high temperature. Alternatively, an aqueous solution of the heat-gelable and water-soluble cellulose ether may added to the heat-processed filling ingredients which have been cooled after the heat process.

The heat-gelable and water-soluble cellulose ether may be added to the heat-processed filling ingredients in a power form, or as an aqueous solution.

The temperature of the filling ingredients at the time of the mixing with the powdery water-soluble cellulose ether may be preferably higher than dissolution temperature of the water-soluble cellulose ether. Accordingly, the temperature may be preferably 70 to 100°C. This is because, when the temperature of the filling ingredients does not exceed the dissolution temperature, the powdery water-soluble cellulose ether does not be dispersed uniformly. The uniformly dispersed powdery water-soluble cellulose ether is cooled at or below the dissolution temperature to dissolve in water in the filling ingredients. Here, the cooling may be natural cooling or cooling from the outside.

Meanwhile, the temperature of the filling ingredients at the time of mixing with the aqueous solution of the water-soluble cellulose ether may be preferably less than the gelation temperature. This is because the water-soluble cellulose ether in a gel state can not be uniformly dispersed. When the temperature is less than the gelation temperature, the water-soluble cellulose ether has been already dissolved so that there is no need to consider the dissolution temperature.

A method of producing the aqueous solution of the water-soluble cellulose ether is not particularly limited. As a dissolution method, a hot water dispersion method has been known. Specifically, in the hot water dispersion method, an aqueous solution having a predetermined concentration is obtained by sufficiently dispersing a powder of the water-soluble cellulose ether in an entirety or a part of a predetermined amount of hot water to form a slurry, and then cooling the slurry as it is or after water is added.

A filled food product is produced by wrapping the obtained filling with a dough skin, followed by subjecting to any one of heating, baking and frying. The frying may include, for example, frying in oil. Note that when the powdery heat-gelable and water-soluble cellulose ether is used, the advantage of the present invention is exhibited as follows. Specifically, the powdery water-soluble cellulose ether may be uniformly mixed with the filling ingredients having a temperature exceeding the dissolution temperature of the powdery water-soluble cellulose ether. Then, the powdery water-soluble cellulose ether may be cooled to a temperature at or below the dissolution temperature, and dissolved in water in the filling ingredients. Subsequently, the filling may be subjected, as a second heating, to any one of heating, baking, and frying at a temperature exceeding the gelation temperature. As a result, the water-soluble cellulose ether may be gelled to provide the effect of the present invention. When the aqueous solution of the heat-gelable and water-soluble cellulose ether is used, the advantage of the present invention is exhibited as follows. Specifically, the water-soluble cellulose ether may be uniformly mixed with the filling ingredients at a temperature which is below the gelation temperature and at which no gelation occurs. Then, the filling may be subjected to any one of heating, baking, and frying at a temperature exceeding the gelation temperature. As a result, the water-soluble cellulose ether may be gelled to provide the effect of the present invention.

The dough skin may not be particularly limited and can be selected in accordance with the type of the filled food product. The dough skin may be optionally prefermented, or may be optionally further fermented after one or more filling ingredients are wrapped with the dough skin.

The method of wrapping the filling may not be particularly limited and can be selected in accordance with the type of the filled food product.

The heating temperature or the frying temperature can be selected as appropriate in accordance with the type of the filled food product.

The filled food product may not be particularly limited and may preferably include steamed buns, breads, pies and doughnuts.

### Examples

Hereinafter, the present invention will be described specifically with reference to Examples and Comparative Examples. However, it should not be construed that the present invention is limited to Examples below.

### (Example 1)

To 23 parts by weight of ground pork and 6 parts by weight of pork ribs which were being stir-fried in a heated frying pan, 1.7 parts by weight of welsh onion, 3.5 parts by weight of bamboo shoot, and 2.3 parts by weight of dried shiitake mushroom were added, and further heating was performed. To this mixture, 0.2 parts by weight of common salt, 0.1 parts by weight of pepper, 0.8 parts by weight of ginger juice, 3 parts by weight of lard, 1.3 parts by weight of soy sauce, 3 parts by weight of sugar, 1.2 parts by weight of sake (a Japanese alcoholic drink), 4.3 parts by weight of water, and 0.5 parts by weight of sesame oil were added. The resulting mixture was well heated, and stirred to uniformity. Thus, 50 g of a filling (A) was obtained.

In 97 g of hot water, 3.0g of methyl cellulose (manufactured by Shin-Etsu Chemical Co., Ltd.) having methoxy group content of 29% by weight and a viscosity of 4000 mPa·s which was determined with an Ubbelohde viscosimeter in a 2.0% by weight aqueous solution at 20°C as specified in JIS K2283-1993 was dispersed to obtain a slurry. The slurry was cooled to 20°C to form a 3.0% by weight aqueous solution of methyl cellulose.

After the above-described filling (A) was cooled to 30°C, 6.0 g of the 3.0% by weight aqueous solution of methyl cellulose was added to 50 g of the filling (A). Then, with through stirring, a filling comprising the heat-processed filling ingredients and 0.3% by weight of methyl cellulose was obtained.

### (Preparation of Dough)

Dough for a steamed bun was prepared. To 38 parts by weight of hot water, 15 parts by weight of strong wheat flour, 46 parts by weight of weak wheat flour and 0.8 parts by weight of yeast were added, kneaded for 4 minutes, and fermented for 6 hours under conditions of a humidity of 80% and a temperature of 30°C. Subsequently, 14 parts by weight of strong wheat flour, 27 parts by weight of weak wheat flour, 0.7 parts by weight of sugar, 0.2 parts by weight of common salt, and 0.4 parts by weight of yeast were mixed together. To this mixture, 20 parts by weight of water and 36 parts by weight of the dough prepared above were added. The resulting mixture was kneaded for 4 minutes. After 2 parts by weight of lard was added thereto, the mixture was kneaded for another 4 minutes. Thus, dough for a steamed bun was obtained.

### (Preparation of Steamed Bun)

After 40 g of the filling prepared as above was wrapped in 60 g of the dough prepared as above, the resulting material was fermented for 20 minutes under conditions of a humidity of 80% and a temperature of 40°C. Subsequently, the material was heated with steam at 180°C for 20 minutes.

### (Texture and Weight)

Immediately after completion of the heating, the steamed bun was divided and then a filling portion was taken out therefrom. The filling portion was measured for texture and weight. Table 1 shows the results.

### (Example 2)

To 50 g of the filling (A) which was produced in Example 1 and which had a temperature of 80°C immediately after the heat-cooking, 0.15g of powdery hydroxypropyl methyl cellulose (manufactured by Shin-Etsu Chemical Co., Ltd.) was added. The hydroxypropyl methyl cellulose had methoxy group content of 22% by weight, hydroxypropoxy group content of 9% by weight, and a viscosity of 4000 mPa·s which was determined with an Ubbelohde viscosimeter in a 2.0% by weight aqueous solution at 20°C, as specified in JIS K2283-1993. The mixture was thoroughly stirred to uniformity, and then cooled until a center temperature of the mixture reached 20°C. Thus, a filling comprising the heat-processed filling ingredients and 0.3% by weight of hydroxypropyl methyl cellulose was obtained.

Similarly to Example 1, a steamed bun was produced and evaluated. Table 1 shows the results.

### (Comparative Example 1)

Twenty three parts by weight of ground pork, 6 parts by weight of pork ribs, 1.7 parts by weight of welsh onion, 3.5 parts by weight of bamboo shoot, 2.3 parts by weight of dried shiitake mushroom, 0.2 parts by weight of common salt, 0.1 parts by weight of pepper, 0.8 parts by weight of ginger juice, 3 parts by weight of lard, 1.3 parts by weight of soy sauce, 3 parts by weight of sugar, 1.2 parts by weight of sake (a Japanese alcoholic drink), 4.3 parts by weight of water, and 0.5 parts by weight of sesame oil were stirred to uniformity. Thus, 50 g of a non-heat-processed filling was obtained.

A steamed bun was produced by using the non-heat-processed filling, and evaluated, while "Preparation of Dough", "Preparation of Steamed Bun" and "Weight" were employed in the same manner as in Example 1. Table 1 shows the results.

### (Comparative Example 2)

Twenty three parts by weight of ground pork, 6 parts by weight of pork ribs, 1.7 parts by weight of welsh onion, 3.5 parts by weight of bamboo shoot, 2.3 parts by weight of dried shiitake mushroom, 0.2 parts by weight of common salt, 0.1 parts by weight of pepper, 0.8 parts by weight of ginger juice, 3 parts by weight of lard, 1.3 parts by weight of soy sauce, 3 parts by weight of sugar, 1.2 parts by weight of sake (a Japanese alcoholic drink), 4.3 parts by weight of water, and 0.5 parts by weight of sesame oil were combined to form filling ingredients. To 50g of the filling ingredients was added 0.15 g of hydroxypropyl methyl cellulose (manufactured by Shin-Etsu Chemical Co., Ltd.) and stirred to uniformity. The hydroxypropyl methyl cellulose had methoxy group content of 22% by weight, hydroxypropoxy group content of 9% by weight, and a viscosity of 4000 mPa·s which was determined with an Ubbelohde viscosimeter in a 2.0% by weight aqueous solution at 20°C as specified in JIS K2283-1993. Thus, an unheated filling comprising non-heat-processed filling ingredients and 0.3 parts by weight of hydroxypropyl methyl cellulose was obtained.

A steamed bun was produced by using the non-heat-processed filling comprising 0.3 parts by weight of hydroxypropyl methyl cellulose, and evaluated, while "Preparation of Dough", "Preparation of Steamed Bun" and "Texture and Weight" were employed in the same manner in Example 1. Table 1 shows the results.

**Table 1**

| | amount of cellulose ether in filling | way of adding cellulose ether | weight of filling after wrapping & heating | texture of filling | texture of skin portion |
|---|---|---|---|---|---|
| | (wt%) | | (g) | | |
| Example 1 | 0.3 | adding aqeous solution of methyl cellulose to heat-processed filling ingredients | 39.2 | juicy texture because water vaporization during heating after wrapping is suppressed | soft, fluffy and favorable texture |
| Example 2 | 0.3 | adding powdery hydroxypropyl methyl cellulose to heat-processed filling ingredients | 38.5 | juicy texture because water vaporization during heating after wrapping is suppressed. | soft, fluffy and favorable texture |
| Comp. Ex. 1 | 0 | - | 27.8 | dry texture because of water vaporization during heating after wrapping | watery and non-resilient texture because the skin portion absorbed water vaporized from the filling. |
| Comp. Ex. 2 | 0.3 | adding powdery hydroxypropyl methyl cellulose to non-heat-processed filling ingredients | 32.0 | dry texture because of water vaporization during heating after wrapping | watery and non-resilient texture because the skin portion absorbed water vaporized from the filling. |

As shown in Table 1, in the steamed bun of Example 1 using the filling comprising the heat-processed filling ingredients and 0.3% by weight of methyl cellulose and in the steamed buns of Example 2 using the filling comprising the heat-processed filling ingredients and 0.3% by weight of hydroxypropyl methyl cellulose, water vaporization during heating conducted after the wrapping was suppressed. Thereby, juicy texture of the fillings, and a soft, fluffy and favorable texture of the dough portions were obtained. In each of Comparative Example 1 using the filling ingredients comprising the non-heat-processed filling ingredients alone and no cellulose ether, and Comparative Example 2 using the non-heat-processed filling ingredients and 0.3% by weight of hydroxypropyl methyl cellulose, water in the filling was vaporized during heating conducted after the wrapping, resulting in dry texture of the filling. Moreover, the dough portion absorbed the water vaporized from the filling, resulting in a watery and non-resilient texture.

## Claims

1. A method of producing a food product, comprising at least the steps of:
heat-processing one or more filling ingredients;
mixing the heat-processed filling ingredients with water-soluble cellulose ether which is gelable during heating, to thereby obtain a filling for a food product, the filling consisting of the heat-processed filling ingredients and the water-soluble cellulose ether; and
taking the filling and wrapping the filling with a dough skin to form a raw filled food product, followed by subjecting the raw filled food product to any one of heating, baking, and frying to obtain a cooked filled food product.

2. The method of producing a food product according to claim 1, wherein
said water-soluble cellulose ether which is gelable during heating is selected from the group consisting of methyl cellulose, hydroxypropyl methyl cellulose, hydroxyethyl methyl cellulose, and hydroxyethyl ethyl cellulose.

3. The method of producing a food product according to any preceding claim, wherein the water-soluble cellulose ether is methyl cellulose having a degree of methoxyl substitution of 19 to 32% by weight, as determined by the Zeisel-GC method or gas chromatography.

4. The method of producing a food product according to claim 1 or 2, wherein the water-soluble cellulose ether is hydroxypropyl methyl cellulose having a degree of methoxyl substitution of 19 to 32% by weight, and a degree of hydroxypropoxyl substitution of 4 to 12% by weight, as determined by the Zeisel-GC method or gas chromatography.

5. The method of producing a food product according to claim 1 or 2, wherein the water-soluble cellulose ether is hydroxyethyl methyl cellulose having a degree of methoxyl substitution of 19 to 32% by weight, and a degree of hydroxyethoxyl substitution of 4 to 12% by weight, as determined by the Zeisel-GC method or gas chromatography.

6. The method of producing a food product according to claim 1 or 2, wherein the water-soluble cellulose ether is hydroxyethyl ethyl cellulose having a degree of ethoxyl substitution of 5 to 20% by weight, and a degree of hydroxyethoxyl substitution of 4 to 60% by weight, as determined by the Zeisel-GC method or gas chromatography.

7. The method of producing a food product according to any preceding claim, wherein the water-soluble cellulose ether is present in an amount of 0.1 to 5% by weight.

8. The method of producing a food product according to any preceding claim, wherein the food product further comprises a thickener present in an amount of 0 to 2% by weight, wherein the thickener is preferably at least one selected from the group consisting of starch, xanthan gum, guar gum, locust bean gum, gellan gum, tamarind seed gum, psyllium seed gum, gum Arabic, carrageenan, alginic acid and salts thereof, pullulan, glucomannan, pectin, gelatin, agar, modified starch, carboxy methyl cellulose and soybean polysaccharides.

9. The method of producing a food product according to any preceding claim, wherein the one or more filling ingredients is selected from the group consisting of meat, seafood, vegetables and/or seasoning.

10. A food product comprising a filling, consisting of:
one or more heat-processed filling ingredients and
water-soluble cellulose ether which is gelable during heating, the filling being obtained by mixing the heat-processed filling ingredients with the water-soluble cellulose ether; and
dough skin which wraps the filling.

11. The food product according to claim 10, further having the features defined in any of claims 2 to 9.

12. The food product obtained by performing any one of heating, baking, and frying on a raw filled food product according to claim 10.

13. The filled food product according to claim 12, which is any one of a steamed bun, a bread, a pie and a doughnut.

## Patentansprüche

1. Verfahren zum Herstellen eines Nahrungsmittelerzeugnisses, wenigstens die folgenden Schritte umfassend:
Hitzeverarbeiten eines oder mehrerer Füllungsbestandteile;
Mischen der hitzeverarbeiteten Füllungsbestandteile mit wasserlöslichem Celluloseether, der beim Erhitzen gelierbar ist, um dadurch eine Füllung für ein Nahrungsmittelerzeugnis zu erhalten, wobei die Füllung aus den hitzebearbeiteten Füllungsbestandteilen und dem wasserlöslichen Celluloseether besteht; und
Nehmen der Füllung und Umhüllen der Füllung mit einer Teighaut, um ein rohes gefülltes Nahrungsmittelerzeugnis auszubilden, gefolgt von Unterziehen des rohen gefüllten Nahrungsmittelerzeugnisses Erhitzen, Backen oder Braten, um ein gekochtes gefülltes Nahrungsmittelerzeugnis zu erhalten.

2. Verfahren zum Herstellen eines Nahrungsmittelerzeugnisses nach Anspruch 1, wobei
der wasserlösliche Celluloseether, der beim Erhitzen gelierbar ist, ausgewählt ist aus der Gruppe bestehend aus Methylcellulose, Hydroxypropylmethylcellulose, Hydroxyethylmethylcellulose und Hydroxyethylethylcellulose.

3. Verfahren zum Herstellen eines Nahrungsmittelerzeugnisses nach einem der vorhergehenden Ansprüche, wobei der wasserlösliche Celluloseether Methylcellulose mit einem Grad an Methoxylsubstitution von 19 bis 32 Gew.-%, wie durch das Zeisel-GC-Verfahren oder Gaschromatographie bestimmt, ist.

4. Verfahren zum Herstellen eines Nahrungsmittelerzeugnisses nach Anspruch 1 oder 2, wobei der wasserlösliche Celluloseether Hydroxypropylmethylcellulose mit einem Grad an Methoxylsubstitution von 19 bis 32 Gew.-% und einem Grad an Hydroxypropoxylsubstitution von 4 bis 12 Gew.-%, wie durch das Zeisel-GC-Verfahren oder Gaschromatographie bestimmt, ist.

5. Verfahren zum Herstellen eines Nahrungsmittelerzeugnisses nach Anspruch 1 oder 2, wobei der wasserlösliche Celluloseether Hydroxyethylmethylcellulose mit einem Grad an Methoxylsubstitution von 19 bis 32 Gew.-% und einem Grad an Hydroxyethoxylsubstitution von 4 bis 12 Gew.-%, wie durch das Zeisel-GC-Verfahren oder Gaschromatographie bestimmt, ist.

6. Verfahren zum Herstellen eines Nahrungsmittelerzeugnisses nach Anspruch 1 oder 2, wobei der wasserlösliche Celluloseether Hydroxyethylethylcellulose mit einem Grad an Ethoxylsubstitution von 5 bis 20 Gew.-% und einem Grad an Hydroxyethoxylsubstitution von 4 bis 60 Gew.-%, wie durch das Zeisel-GC-Verfahren oder Gaschromatographie bestimmt, ist.

7. Verfahren zum Herstellen eines Nahrungsmittelerzeugnisses nach einem der vorhergehenden Ansprüche, wobei der wasserlösliche Celluloseether in einer Menge von 0,1 bis 5 Gew.-% vorliegt.

8. Verfahren zum Herstellen eines Nahrungsmittelerzeugnisses nach einem der vorhergehenden Ansprüche, wobei das Nahrungsmittelerzeugnis ferner ein Verdickungsmittel umfasst, das in einer Menge von 0 bis 2 Gew.-% vorliegt, wobei das Verdickungsmittel vorzugsweise wenigstens eines ist, ausgewählt aus der Gruppe bestehend aus Stärke, Xanthan, Guargummi, Johannisbrotkernmehl, Gellan, Tamarindensamengummi, Flohsamen, Gummi arabicum, Carrageen, Alginsäure und Salzen davon, Pullulan, Glucomannan, Pektin, Gelatine, Agar, modifizierter Stärke, Carboxymethylcellulose und Sojapolysacchariden.

9. Verfahren zum Herstellen eines Nahrungsmittelerzeugnisses nach einem der vorhergehenden Ansprüche, wobei der eine oder die mehreren Füllungsbestandteile ausgewählt sind aus der Gruppe bestehend aus Fleisch, Meeresfrüchten, Gemüse und/oder Würzmitteln.

10. Nahrungsmittelerzeugnis, das eine Füllung umfasst, die aus Folgendem besteht:
einem oder mehreren hitzeverarbeiteten Füllungsbestandteilen und
wasserlöslichem Celluloseether, der beim Erhitzen gelierbar ist, wobei die Füllung durch Mischen der hitzeverarbeiteten Füllungsbestandteile mit dem wasserlöslichen Celluloseether erhalten wird; und
Teighaut, die die Füllung umhüllt.

11. Nahrungsmittelerzeugnis nach Anspruch 10, ferner die Merkmale nach einem der Ansprüche 2 bis 9 aufweisend.

12. Nahrungsmittelerzeugnis, das durch Durchführen von Erhitzen, Backen oder Braten eines rohen gefüllten Nahrungsmittelerzeugnisses nach Anspruch 10 erhalten wird.

13. Gefülltes Nahrungsmittelerzeugnis nach Anspruch 12, bei dem es sich um ein Dampfbrötchen, ein Brot, eine Pastete oder einen Donut handelt.

## Revendications

1. Procédé de production d'un produit alimentaire, comprenant au moins les étapes suivantes :
traiter thermiquement un ou plusieurs ingrédients de garniture ;
mélanger les ingrédients de garniture traités thermiquement avec de l'éther de cellulose soluble dans l'eau qui est gélifiable durant le chauffage, afin d'obtenir une garniture pour un produit alimentaire, la garniture étant constituée des ingrédients de garniture traités thermiquement et de l'éther de cellulose soluble dans l'eau ; et
prendre la garniture et envelopper la garniture dans une enveloppe de pâte pour former un produit alimentaire garni cru, puis le produit alimentaire garni cru est soumis à une quelconque action parmi le chauffage, la cuisson et la friture pour obtenir un produit alimentaire garni cuit.

2. Procédé de production d'un produit alimentaire selon la revendication 1, dans lequel
ledit éther de cellulose soluble dans l'eau qui est gélifiable durant le chauffage est choisi dans le groupe constitué de méthylcellulose, d'hydroxypropylméthylcellulose, d'hydroxyéthylméthylcellulose et d'hydroxyéthyléthylcellulose.

3. Procédé de production d'un produit alimentaire selon l'une quelconque des revendications précédentes, l'éther de cellulose soluble dans l'eau étant du méthylcellulose ayant un degré de substitution méthoxyle de 19 à 32 % en poids, comme cela est déterminé par la méthode de Zeisel-GC ou la chromatographie en phase gazeuse.

4. Procédé de production d'un produit alimentaire selon la revendication 1 ou 2, l'éther de cellulose soluble dans l'eau étant de l'hydroxypropylméthylcellulose ayant un degré de substitution méthoxyle de 19 à 32 % en poids, et un degré de substitution hydroxypropoxyle de 4 à 12 % en poids, comme cela est déterminé par la méthode de Zeisel-GC ou la chromatographie en phase gazeuse.

5. Procédé de production d'un produit alimentaire selon la revendication 1 ou 2, l'éther de cellulose soluble dans l'eau étant de l'hydroxyéthylméthylcellulose ayant un degré de substitution méthoxyle de 19 à 32 % en poids, et un degré de substitution hydroxyéthoxyle de 4 à 12 % en poids, comme cela est déterminé par la méthode de Zeisel-GC ou la chromatographie en phase gazeuse.

6. Procédé de production d'un produit alimentaire selon la revendication 1 ou 2, l'éther de cellulose soluble dans l'eau étant de l'hydroxyéthyléthylcellulose ayant un degré de substitution éthoxyle de 5 à 20 % en poids, et un degré de substitution hydroxyéthoxyle de 4 à 60 % en poids, comme cela est déterminé par la méthode de Zeisel-GC ou la chromatographie en phase gazeuse.

7. Procédé de production d'un produit alimentaire selon l'une quelconque des revendications précédentes, dans lequel l'éther de cellulose soluble dans l'eau est présent dans une quantité de 0,1 à 5 % en poids.

8. Procédé de production d'un produit alimentaire selon l'une quelconque des revendications précédentes, le produit alimentaire comprenant en outre un épaississant présent dans une quantité de 0 à 2 % en poids, l'épaississant étant de préférence au moins un agent choisi dans le groupe constitué d'amidon, de gomme de xanthane, de gomme de guar, de gomme de caroube, de gomme de gellane, de gomme de tamarin, de gomme de psyllium, de gomme arabique, de carraghénane, d'acide alginique et de ses sels, de pullulane, de glucomannane, de pectine, de gélatine, de gélose, d'amidon modifié, de carboxyméthylcellulose et de polysaccharides de soja.

9. Procédé de production d'un produit alimentaire selon l'une quelconque des revendications précédentes, le ou les ingrédients de garniture étant choisi(s) dans le groupe constitué de viandes, de poissons et fruits de mer, de légumes et/ou d'assaisonnements.

10. Produit alimentaire comprenant une garniture, constitué :
d'un ou de plusieurs ingrédients de garniture traités thermiquement et
d'éther de cellulose soluble dans l'eau qui est gélifiable durant le chauffage, la garniture étant obtenue en mélangeant les ingrédients de garniture traités thermiquement à l'éther de cellulose soluble dans l'eau ; et
d'une enveloppe de pâte qui enveloppe la garniture.

11. Produit alimentaire selon la revendication 10, ayant en outre les caractéristiques définies dans l'une quelconque des revendications 2 à 9.

12. Produit alimentaire obtenu en effectuant une quelconque action parmi le chauffage, la cuisson et la friture sur un produit alimentaire garni cru selon la revendication 10.

13. Produit alimentaire garni selon la revendication 12, qui est un quelconque produit parmi un petit pain à la vapeur, un pain, une tarte et un beignet.
